(19) **Europäisches Patentamt / European Patent Office / Office européen des brevets**

(11) **EP 3 732 804 B1**

(12) **FASCICULE DE BREVET EUROPEEN**

(45) Date de publication et mention
de la délivrance du brevet:
**17.05.2023 Bulletin 2023/20**

(21) Numéro de dépôt: **18822403.4**

(22) Date de dépôt: **21.12.2018**

(51) Classification Internationale des Brevets (IPC):
**H04B 10/077** *(2013.01)* **H04B 10/516** *(2013.01)*
**H04L 25/49** *(2006.01)*

(52) Classification Coopérative des Brevets (CPC):
**H04B 10/077; H04B 10/516; H04L 25/4902**

(86) Numéro de dépôt international:
**PCT/EP2018/086637**

(87) Numéro de publication internationale:
**WO 2019/129721 (04.07.2019 Gazette 2019/27)**

(54) **SYSTÈME DE COMMUNICATIONS DE DONNÉES COMPORTANT UN CANAL PRINCIPAL HAUT DÉBIT ET UN CANAL DE SECOURS BAS DÉBIT À HAUTE FIABILITÉ**

DATENKOMMUNIKATIONSSYSTEM MIT EINEM HOCHGESCHWINDIGKEITSHAUPTKANAL UND EINEM NIEDRIGGESCHWINDIGKEITSSICHERUNGSKANAL MIT HOHER ZUVERLÄSSIGKEIT

DATA COMMUNICATION SYSTEM INCLUDING A HIGH-SPEED MAIN CHANNEL AND A LOW-SPEED BACKUP CHANNEL WITH HIGH RELIABILITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2017 FR 1701397**

(43) Date de publication de la demande:
**04.11.2020 Bulletin 2020/45**

(73) Titulaire: **THALES**
**92400 Courbevoie (FR)**

(72) Inventeur: **ROUSSEAU, Pascal**
**78995 ELANCOURT (FR)**

(74) Mandataire: **Atout PI Laplace**
**Immeuble "Visium"**
**22, avenue Aristide Briand**
**94117 Arcueil Cedex (FR)**

(56) Documents cités:
**WO-A1-2015/122836 GB-A- 2 332 317**
**US-A- 3 978 288**

## Description

Le domaine de l'invention est celui des systèmes de communications au sens large. Il peut s'appliquer aux systèmes de communications à haut débit et, en particulier aux systèmes de communications optiques par fibres optiques.

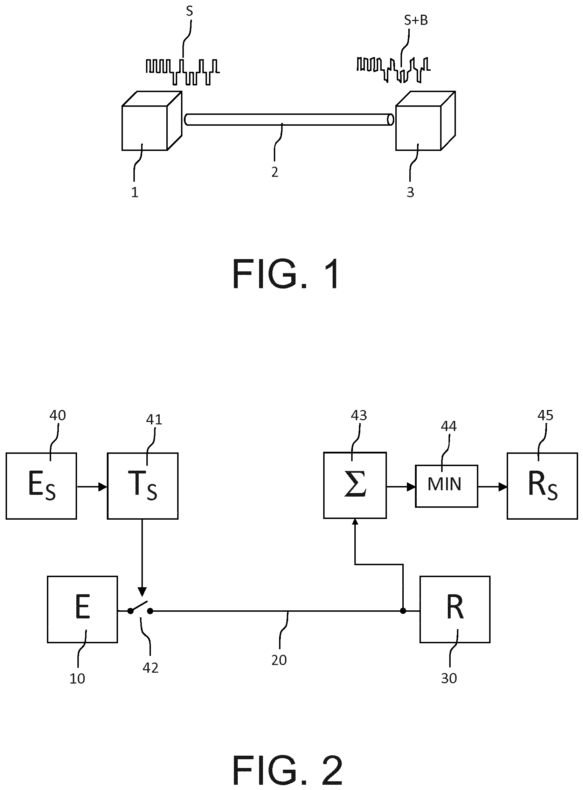

Le schéma général d'un système de communications optiques est représenté succinctement en figure 1. Il comporte classiquement des moyens d'émission 1, des moyens de transmission 2 et des moyens de réception 3. Les moyens d'émission génèrent un signal codé S$_E$, le codage pouvant être un codage d'amplitude ou de fréquence ou de phase. Quelque soit le type de transmission, des perturbations peuvent intervenir, brouillant le signal émis et le signal reçu vaut alors S+B, B étant représentatif du bruit introduit.

Dans un certain nombre d'applications de télécommunications, il est nécessaire de disposer d'une liaison de service ou de secours plus robuste aux perturbations extérieures que la liaison principale de façon qu'un certain nombre d'informations puissent continuer à transiter lorsque la liaison principale est perturbée. Ces informations peuvent avoir un débit nettement inférieur à celui du canal principal.

Une première solution consiste à mettre en place un canal de communication annexe indépendant du canal principal. On comprend que cette solution est complexe à mettre en oeuvre. Une seconde solution consiste à modifier les caractéristiques du canal principal, ce qui peut présenter d'autres inconvénients, en particulier au niveau des organes de codage et de décodage.

Le système de communication selon l'invention ne présente pas les inconvénients précédents. Il est essentiellement basé sur l'interruption d'émission du canal principal à des instants prédéfinis pendant des durées connues, le positionnement temporel des interruptions étant représentatif d'un signal de secours, un repérage particulier de ces interruptions permettant d'accroitre de façon significative le rapport signal sur bruit, le signal de secours étant ainsi bien plus robuste aux perturbations.

Plus précisément, l'invention a pour objet un système de communications de données comportant un canal principal comportant des moyens d'émission d'un signal, des moyens de transmission dudit signal et des moyens de réception dudit signal, les moyens d'émission émettant des signaux à une fréquence connue ,
caractérisé en ce que le système de communications comporte un canal de secours comportant les dispositifs suivants :

un dispositif d'arrêt temporaire du signal émis à des instants dits d'arrêt pendant une durée constante correspondant à l'émission d'un nombre déterminé de signaux émis, les instants d'arrêt correspondant à un codage temporel d'un signal de secours ;
un dispositif de sommation des amplitudes des signaux reçus, la sommation étant effectuée sur un second nombre déterminé de signaux reçus, ledit second nombre étant inférieur ou égal audit premier nombre ;
un dispositif de détermination temporelle des instants correspondant aux minima du signal sommé, lesdits instants déterminés ayant le même codage temporel que les instants d'arrêt.

Avantageusement, le nombre déterminé de signaux émis est compris entre 100 et 1000.

Avantageusement, le codage des instants d'arrêt est effectué par une modulation en position d'impulsions.

Avantageusement, le ou les signaux émis juste avant l'instant d'arrêt ont un format connu de façon à éviter toute ambiguïté sur l'instant d'arrêt.

Avantageusement, le codage du signal est du type « Retour-à-Zéro » ou « RZ ».

Avantageusement, la sommation est glissante, le second nombre déterminé étant égal au premier nombre déterminé.

Avantageusement, la sommation est effectuée périodiquement, la période correspondant à la durée d'émission du second nombre déterminé de signaux reçus, le second nombre déterminé étant égal à la moitié du premier nombre déterminé.

Avantageusement, le système est un système de communications optiques, les moyens de transmission du signal étant une fibre optique.

L'invention sera mieux comprise et d'autres avantages apparaîtront à la lecture de la description qui va suivre donnée à titre non limitatif et grâce aux figures annexées parmi lesquelles :

La figure 1 représente le schéma général d'un système de communications selon l'art antérieur ;
La figure 2 représente le schéma général d'un système de communications selon l'invention comportant un canal de secours ;
La figure 3 représente les signaux émis et les signaux reçus sur le canal de secours en fonction du temps ;
La figure 4 représente le codage temporel du signal de secours, à l'émission et à la réception.

Le système de communication de secours selon l'invention fonctionne avec tous types d'émetteurs et de récepteurs qu'ils soient électroniques ou optiques et tous types de codage numérique. Par exemple, le codage du signal peut être un codage à modulation d'amplitude ou à modulation de fréquence ou à modulation de phase.

A titre d'exemple, le codage du signal est de type « RZ ». Ce codage est un codage d'amplitude dans lequel l'amplitude d'un « un » binaire vaut A, l'amplitude d'un « zéro » binaire vaut -A et dans lequel, après l'émission d'un bit, le signal retourne systématiquement à zéro. D'autres codages sont, bien entendu, possibles. Dans la suite de la description, on suppose que le codage est du type RZ.

Le canal de secours comporte un émetteur 40 qui émet des signaux binaires. Ces signaux de secours véhiculent une information plus rudimentaire que le canal de transmission principal. Leur débit est généralement de cent à mille fois inférieur à celui du canal principal. Ces signaux sont transformés en instants représentatifs notés ti par des moyens électroniques 41. La position de ces instants sur une échelle de temps est représentative du signal de secours. Le codage est typiquement un codage en modulation en position d'impulsions, connu sous l'acronyme « PPM » signifiant « Pulse Position Modulation ». Les principes généraux de ce type de codage sont connus de l'homme du métier.

A titre de premier exemple, la figure 2 représente le schéma général d'un système de communications selon l'invention comportant un canal de secours fonctionnant avec une sommation glissante des signaux. Le canal de communication principal comporte un émetteur 10, une liaison de transmission 20 et un récepteur 30.

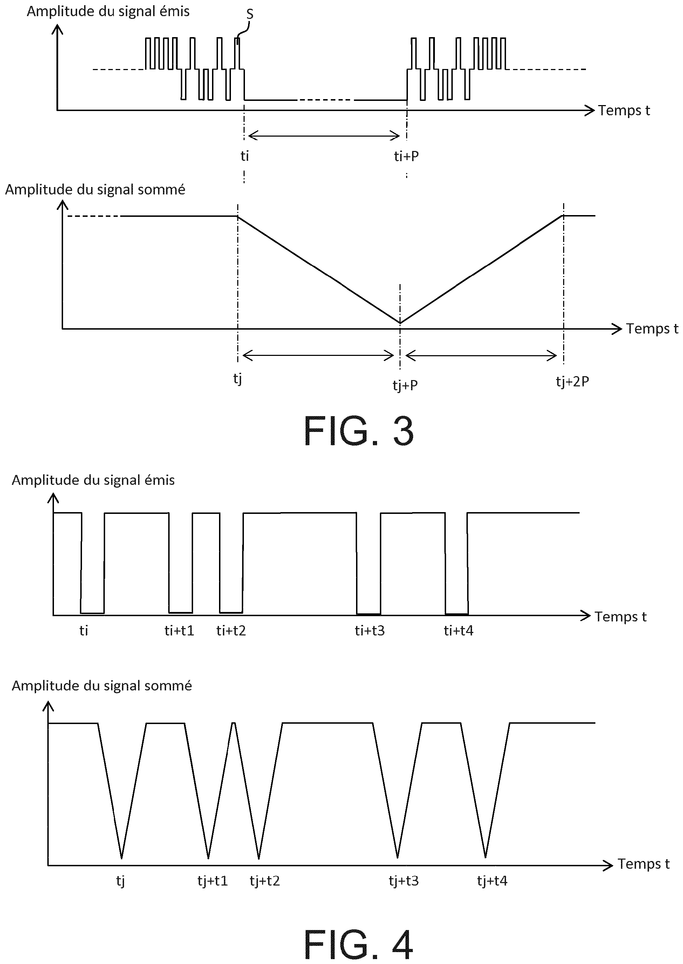

Les moyens électroniques 41 commandent un interrupteur 42 qui suspend le signal d'émission à chaque instant ti pour une durée constante P. Cette durée constante correspond à l'émission d'un premier nombre de signaux d'émission. Généralement, cette durée correspond à la durée d'émission de plusieurs centaines de signaux d'émission. Le graphique du haut de la figure 3 représente la variation dans le temps de l'amplitude du signal transmis S sur la liaison de transmission 20. Sur cette figure 3 et sur la suivante, les unités de temps et d'amplitude sont arbitraires. Avant l'instant ti, les signaux sont transmis normalement. Entre l'instant ti et l'instant ti+P, il y a absence de transmission de signal sur la ligne. Après l'instant ti+P, la transmission des signaux reprend normalement.

Le canal de secours comprend également des moyens de réception qui comportent essentiellement trois dispositifs principaux. Le premier dispositif 43 réalise une somme glissante Σ des signaux reçus par le récepteur 30 pendant la même durée constante P. On entend par somme glissante ou somme mobile une succession de sommes de signaux, chaque somme comporte le même nombre de signaux, chaque somme est différente de la précédente en ce qu'elle contient un nouveau signal temporel de plus et un ancien signal temporel de moins.

Tant que des signaux sont émis, cette somme glissante Σ varie peu dans le temps dans la mesure où elle intègre un grand nombre de signaux reçus. Lorsque le signal s'interrompt, la valeur de cette somme diminue de façon quasiment linéaire jusqu'à un niveau voisin de zéro et qui représente le bruit de la ligne de transmission. Si le dernier signal reçu l'est à l'instant tj, le minimum de la somme est situé à l'instant tj+P. Cette variation de la somme glissante des signaux en fonction du temps est illustrée sur le graphique du bas de la figure 3. Ensuite, lorsque les signaux sont réémis de nouveau, cette somme reprend de façon quasi-linéaire son niveau d'origine qu'elle atteint à l'instant tj+2P. Par conséquent, l'amplitude de la somme glissante comporte des V symétriques de baisse d'intensité, l'instant correspondant à la pointe du V étant représentatif de l'instant d'interruption du signal principal.

Le dispositif 44 a comme fonction de dater ces minima de la somme glissante. Pour déterminer ces minima, il suffit de comparer les valeurs des sommes glissantes successives. Les positions temporelles de ces minima correspondent exactement à celles du signal de secours. Elles sont simplement décalées dans le temps.

La figure 4 illustre ce principe. Elle comporte deux graphes. Celui du haut représente la chronologie de l'amplitude des signaux de secours émis et celui du bas la chronologie de l'amplitude des signaux de secours reçus en fonction du temps. Par exemple, les signaux de secours sont émis aux instants ti, ti+t1, ti+t2, ti+t3 et ti+t4. Ils sont décodés aux instants tj, tj+t1, tj+t2, tj+t3 et tj+t4. Comme on le voit, les durées séparant les instants d'émission correspondent aux durées séparant les instants de réception. Connaissant le codage utilisé et connaissant les instants de réception, le dispositif 45 reconstitue alors le signal temporel de secours.

Dans le cas général, les suspensions du signal d'émission pendant les durées constantes P ne posent pas de problèmes de gestion particuliers.

Pour augmenter la précision de la datation des instants d'interruption, il est intéressant de faire en sorte que le ou les signaux émis juste avant les instants d'arrêt aient un format connu de façon à éviter toute ambiguïté sur ces instants d'arrêt. Par exemple, dans le cas d'un codage RZ, il est possible de répartir les informations à « zéro » en plusieurs blocs répartis de telle sorte que l'identification et le positionnement temporel soient non ambigus.

Ce type de codage a de multiples avantages. Un des principaux est que l'on augmente de façon importante le rapport signal à bruit. Par exemple, si le signal est du type RZ, si une période de durée P contient n signaux binaires valant « 1 » ou « 0 », on peut estimer que, pendant une première moitié de la durée de la période P, le signal est à « 1 » et que, pendant la seconde moitié, le signal est à « 0 » si n est suffisamment grand. Après détection, le signal « 1 » correspond à une amplitude S et le signal « 0 » correspond à une amplitude B correspondant au bruit du système de communications. Le rapport signal à bruit $R_{SB}$ vaut classiquement :

$$R_{SB} = \frac{S}{B}$$

Lorsqu'il y a émission, la sommation des signaux sur la période P est formée pour moitié de signaux ayant une amplitude S et pour moitié de signaux ayant une amplitude B aléatoire. On sait que la somme de n signaux aléatoires d'amplitude moyenne B a une amplitude moyenne $\sqrt{n}.B$ . Par conséquent, la valeur de la somme $\Sigma_E$ des signaux sur une période P vaut :

$$\Sigma_E = \frac{n}{2}.S + \sqrt{\frac{n}{2}}.B$$

Lorsqu'il y a absence d'émission pendant une durée P, la somme $\Sigma_{NE}$ des signaux sur une période P correspond à la sommation du bruit et vaut :

$$\Sigma_{NE} = \sqrt{n}.B$$

Dans ce cas, le rapport signal à bruit $R_\Sigma$ vaut :

$$R_\Sigma = \frac{\Sigma_E}{\Sigma_{NE}} = \frac{\frac{n}{2}.S + \sqrt{\frac{n}{2}}.B}{\sqrt{n}.B} = \frac{\sqrt{n}}{2}.\frac{S}{B} + \frac{1}{\sqrt{2}}$$

Soit $R_\Sigma \approx \frac{\sqrt{n}}{2}.R_{SB}$

Par conséquent, ce rapport signal à bruit est environ $\frac{\sqrt{n}}{2}$ plus élevé que le rapport signal à bruit des signaux transmis. Par exemple, si n vaut 400, on accroît le rapport signal à bruit d'un facteur 10. On comprend que le canal de secours est ainsi bien plus robuste au bruit que le canal principal. Avec cet exemple, si le bruit est du même ordre de grandeur que le signal principal, ce qui le rend totalement inexploitable, le rapport signal à bruit du canal de secours sera de 10 et son exploitation reste tout à fait possible.

Ce mode de transmission présente d'autres avantages. Il est facile à mettre en oeuvre et ne nécessite que des adaptations simples et mineures des électroniques d'émission et de réception.

A titre de second exemple de réalisation, on peut remplacer la somme glissante de l'exemple précédent par une sommation effectuée périodiquement, la période correspondant à la durée d'émission d'un second nombre déterminé de signaux reçus, le second nombre déterminé étant égal à la moitié du premier nombre déterminé.

Par ce moyen, lorsqu'un arrêt d'émission se produit pendant une durée égale à l'émission d'un premier nombre déterminé de signaux, il existe nécessairement une somme qui ne comporte que du bruit et aucun signal. Cette somme minimale est facile à déterminer. L'instant moyen correspondant à cette somme est représentatif d'un instant d'interruption du signal. Par rapport à la solution précédente, la détermination des instants d'arrêt est moins précise et le gain en rapport signal à bruit un peu moins bon. Par contre, cette solution technique est un peu plus simple à mettre en oeuvre.

Un des avantages du système de communications selon l'invention est qu'il n'introduit pas de modifications dans le signal principal mais uniquement des interruptions de signal, beaucoup plus faciles à gérer qu'un codage du signal lui-même. Il est totalement indépendant du codage principal. Ainsi, on peut l'utiliser avec un signal crypté sans avoir à connaître la clé de cryptage mais uniquement le codage du canal de secours.

Le système de communications peut être un système de communications électroniques, la transmission des signaux se faisant par voie aérienne ou filaire.

Le système de communication peut également être un système de communications optiques, les moyens de transmission du signal étant une fibre optique ou un réseau de fibres optiques.

## Revendications

1. Système de communications de données comportant un canal principal comportant des moyens d'émission (10) d'un signal périodique, des moyens de transmission (20) dudit signal et des moyens de réception (30) dudit signal, les moyens d'émission émettant des signaux à une fréquence connue, **caractérisé en ce que** le système de communications comporte un canal de secours comportant les dispositifs suivants :

   un dispositif d'arrêt temporaire (42) du signal émis à des instants dits d'arrêt pendant une durée constante correspondant à l'émission d'un premier nombre déterminé de signaux émis, les instants d'arrêt correspondant à un codage temporel d'un signal de secours ;
   un dispositif de sommation (43) des amplitudes des signaux reçus, la sommation étant effectuée sur un second nombre déterminé de signaux reçus, ledit second nombre étant inférieur ou égal audit premier nombre ;
   un dispositif (44) de détermination temporelle des instants correspondant aux minima des signaux sommés, lesdits instants déterminés ayant le même codage temporel que les instants d'arrêt.

2. Système de communications de données selon la revendication 1, **caractérisé en ce que** le nombre déterminé de signaux émis est compris entre 100 et 1000.

3. Système de communications de données selon l'une des revendications précédentes, **caractérisé en ce que** le codage des instants d'arrêt est effectué par une modulation en position d'impulsions.

**4.** Système de communications de données selon l'une des revendications précédentes, **caractérisé en ce que** le ou les signaux émis juste avant l'instant d'arrêt ont un format connu de façon à éviter toute ambiguïté sur l'instant d'arrêt.

**5.** Système de communications de données selon l'une des revendications précédentes, **caractérisé en ce que** le codage du signal est du type « Retour-à-Zéro » ou « RZ ».

**6.** Système de communications de données selon l'une des revendications précédentes, **caractérisé en ce que** la sommation est glissante, le second nombre déterminé étant égal au premier nombre déterminé.

**7.** Système de communications de données selon les revendications 1 à 5, **caractérisé en ce que** la sommation est effectuée périodiquement, la période correspondant à la durée d'émission du second nombre déterminé de signaux reçus, le second nombre déterminé étant égal à la moitié du premier nombre déterminé.

**8.** Système de communications de données selon l'une des revendications précédentes, **caractérisé en ce que** le système est un système de communications optiques, les moyens de transmission du signal étant une fibre optique.

**Patentansprüche**

**1.** Datenkommunikationssystem, das einen Hauptkanal aufweist, der Mittel (10) zum Senden eines periodischen Signals, Mittel (20) zum Übertragen des Signals und Mittel (30) zum Empfangen des Signals aufweist, wobei die Sendemittel Signale mit einer bekannten Frequenz senden,
**dadurch gekennzeichnet, dass** das Kommunikationssystem einen Hilfskanal mit den folgenden Vorrichtungen aufweist:

einer Vorrichtung (42) zum vorübergehenden Stoppen des gesendeten Signals zu sogenannten Stoppzeitpunkten während einer konstanten Dauer entsprechend dem Senden einer ersten bestimmten Anzahl von gesendeten Signalen, wobei die Stoppzeitpunkte einer zeitlichen Codierung eines Hilfssignals entsprechen;
einer Vorrichtung (43) zum Summieren der Amplituden der empfangenen Signale, wobei die Summierung auf eine zweite bestimmte Anzahl von empfangenen Signalen durchgeführt wird, wobei die zweite Anzahl kleiner oder gleich der ersten Anzahl ist;
einer Vorrichtung (44) zum zeitlichen Bestimmen der Zeitpunkte entsprechend den Minima der summierten Signale, wobei die bestimmten Zeitpunkte die gleiche zeitliche Codierung wie die Stoppzeitpunkte aufweisen.

**2.** Datenkommunikationssystem nach Anspruch 1, **dadurch gekennzeichnet, dass** die bestimmte Anzahl von gesendeten Signalen zwischen 100 und 1 000 liegt.

**3.** Datenkommunikationssystem nach einem der vorhergehenden Ansprüche, **dadurch gekennzeichnet, dass** die Codierung der Stoppzeitpunkte durch eine Pulspositionsmodulation durchgeführt wird.

**4.** Datenkommunikationssystem nach einem der vorhergehenden Ansprüche, **dadurch gekennzeichnet, dass** die ein oder mehreren unmittelbar vor dem Stoppzeitpunkt gesendeten Signale ein bekanntes Format aufweisen, um jegliche Mehrdeutigkeit bezüglich des Stoppzeitpunkts zu vermeiden.

**5.** Datenkommunikationssystem nach einem der vorhergehenden Ansprüche, **dadurch gekennzeichnet, dass** die Codierung des Signals vom Typ "Rückkehr zu Null" oder "RZ" ist.

**6.** Datenkommunikationssystem nach einem der vorhergehenden Ansprüche, **dadurch gekennzeichnet, dass** die Summierung gleitend ist, wobei die zweite bestimmte Anzahl gleich der ersten bestimmten Anzahl ist.

**7.** Datenkommunikationssystem nach den Ansprüchen 1 bis 5, **dadurch gekennzeichnet, dass** die Summierung periodisch durchgeführt wird, wobei die Periode der Dauer des Sendens der zweiten bestimmten Anzahl von empfangenen Signalen entspricht, wobei die zweite bestimmte Anzahl gleich der Hälfte der ersten bestimmten Anzahl ist.

**8.** Datenkommunikationssystem nach einem der vorhergehenden Ansprüche, **dadurch gekennzeichnet, dass** das System ein optisches Kommunikationssystem ist, wobei die Mittel zum Übertragen des Signals eine optische Faser sind.

**Claims**

**1.** A data communication system having a main channel that has means (10) for sending a periodic signal, means (20) for transmitting said signal and means (30) for receiving said signal, the sending means sending signals at a known frequency,
**characterised in that** the communication system has a stand-by channel that has the following devices:

a device (42) for temporarily stopping the sent signal at instants referred to as stopping instants for a constant length of time that corresponds to the sending of a first determined number of sent signals, the stopping instants corresponding to temporal coding of a stand-by signal;
a device (43) for summing the amplitudes of the received signals, the summing being carried out over a second determined number of received signals, said second number being less than or equal to said first number;
a device (44) for temporally determining the instants corresponding to the minima of the summed signals, said determined instants having the same temporal coding as the stopping instants.

2. The data communication system according to claim 1, **characterised in that** the determined number of sent signals is between 100 and 1 000.

3. The data communication system according to one of the preceding claims, **characterised in that** the coding of the stopping instants is carried out by pulse-position modulation.

4. The data communication system according to one of the preceding claims, **characterised in that** the one or more signals sent just before the stopping instant have a known format so as to avoid any ambiguity as to the stopping instant.

5. The data communication system according to one of the preceding claims, **characterised in that** the coding of the signal is "return-to-zero", or "RZ", coding.

6. The data communication system according to one of the preceding claims, **characterised in that** the summing is sliding summing, the second determined number being equal to the first determined number.

7. The data communication system according to claims 1 to 5, **characterised in that** the summing is carried out periodically, the period corresponding to the length of time taken to send the second determined number of received signals, the second determined number being equal to half the first determined number.

8. The data communication system according to one of the preceding claims, **characterised in that** the system is a system for optical communication, the means for transmitting the signal being an optical fibre.

# FIG. 1

# FIG. 2

Amplitude du signal émis

S

ti          ti+P

→ Temps t

Amplitude du signal sommé

tj          tj+P          tj+2P

→ Temps t

# FIG. 3

Amplitude du signal émis

ti          ti+t1    ti+t2          ti+t3          ti+t4

→ Temps t

Amplitude du signal sommé

tj          tj+t1    tj+t2          tj+t3          tj+t4

→ Temps t

# FIG. 4

8